(19) Europäisches Patentamt
European Patent Office
Office européen des brevets

(11) **EP 2 439 520 A1**

(12) **DEMANDE DE BREVET EUROPEEN**

(43) Date de publication:
**11.04.2012 Bulletin 2012/15**

(51) Int Cl.:
***G01N 23/20*** *(2006.01)*

(21) Numéro de dépôt: **11184265.4**

(22) Date de dépôt: **07.10.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **11.10.2010 FR 1058209**

(71) Demandeur: **COMMISSARIAT A L'ENERGIE ATOMIQUE ET AUX ENERGIES ALTERNATIVES**
**75015 Paris (FR)**

(72) Inventeurs:
• **Bleuet, Pierre**
**38300 Bourgoin Jallieu (FR)**
• **Gergaud, Patrice**
**38500 La Buisse (FR)**
• **Quey, Romain**
**38160 Saint Marcellin (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(54) **Procédé de mesure de l'orientation et de la déformation élastique de grains dans des matériaux multicristallins**

(57) L'invention concerne un procédé de mesure de l'orientation et de la déformation élastique déviatorique de la maille cristalline des grains contenus dans un échantillon de matériau multicristallin comportant un ensemble de grains (G1, ..., Gi,..., Gn) caractérisé en ce qu'il comprend l'enregistrement d'une série de clichés de Laue et une opération de désentrelacement desdits clichés de Laue, pouvant avantageusement être combinée à une opération de tomographie pour identifier en outre l'étendue spatiale desdits grains.

FIG.3b

EP 2 439 520 A1

**Description**

Le domaine de l'invention est celui de la caractérisation de la structure et des champs mécaniques dans des matériaux multicristallins par rayons diffractants de type rayons X. La plupart des matériaux (dans le domaine de la microélectronique, des nouvelles énergies, des alliages, des céramiques, des minéraux) se composent de cristaux de taille, de forme et de structure différentes dont la mesure de d'orientation et de la déformation est importante.

On discerne classiquement:

- les matériaux monocristallins : un seul gros cristal est étudié ;
- les matériaux multicristallins, où quelques dizaines de cristaux sont étudiés;
- et les poudres, ou des milliers de cristallites sont étudiées.

La présente invention concerne plus précisément le second cas.

Actuellement, la diffraction par rayons X représente une technique employée pour caractériser des cristaux. Dans le cas d'un multicristal, la méthode usuelle consiste à illuminer l'échantillon par un faisceau X polychromatique haute énergie (faisceau dit « blanc »). On mesure ainsi sur un détecteur 2D une image comprenant de nombreuses taches de diffraction, image dite cliché de Laue, dont l'écart entre les taches permet de caractériser le groupe d'espace, l'orientation et la déformation élastique déviatorique d'un grain (changement de forme de la maille cristalline). Pour obtenir expérimentalement le tenseur complet des déformations élastiques, il est ensuite nécessaire de repasser en faisceau monochromatique afin d'obtenir la composante hydrostatique (dilatation du grain) du tenseur des déformations.

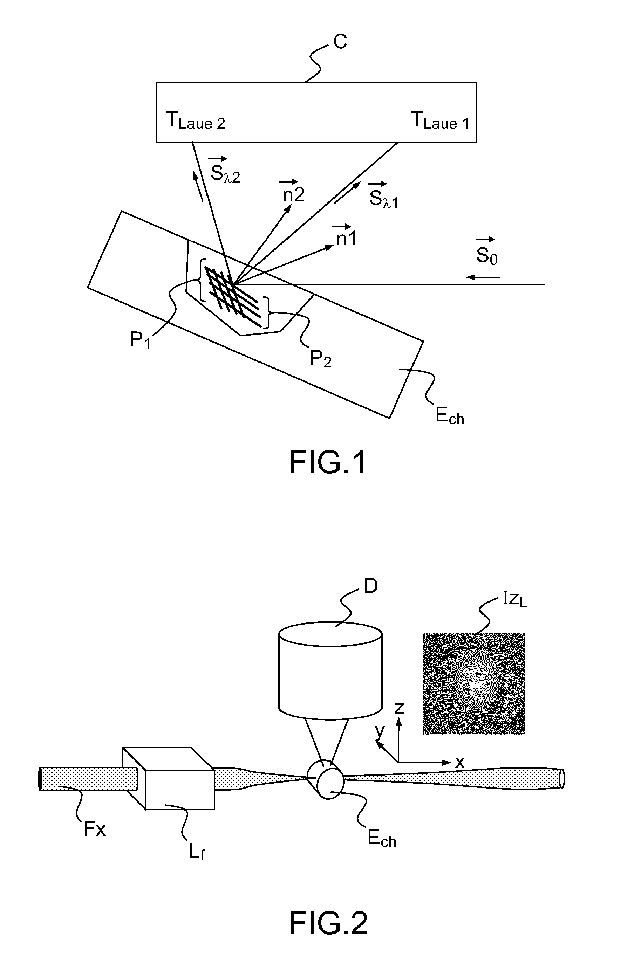

La figure 1 schématise ainsi un échantillon $E_{ch}$, irradié par un faisceau $S_0$ dit « blanc » car contenant des rayons X de plusieurs longueurs d'onde notamment une longueur d'onde $\lambda_1$ et une longueur d'onde $\lambda_2$, générant la diffraction de deux plans cristallins $P_1$ et $P_2$, soumis au même faisceau $S_0$ contenant les deux longueurs d'onde $\lambda_1$ et $\lambda_2$. La mesure des faisceaux diffractés $S_{\lambda 1}$ et $S_{\lambda 2}$ sur un détecteur de type CCD référence C, permet de remonter à l'orientation du grain et à la structure cristalline.

En effet, le faisceau « blanc » illumine un grain et génère un ensemble de taches diffractées sur le détecteur 2D, chaque tache correspondant à la diffraction d'un plan cristallin par une des longueurs d'onde du faisceau incident. Les taches de diffraction correspondent à des particules dénommées de manière générale dans la présente demande, particules numériques images. C'est en fait la loi de Bragg $\lambda = 2.dhkl.sin(\theta_B)$, $\theta_B$ étant l'angle de Bragg, qui se vérifie une multitude de fois en raison de la multitude de longueurs d'ondes $\lambda_1, \lambda_2, ... \lambda_N$ qui mettent une multitude de plan cristallins en conditions de diffraction.

La différence vectorielle $S_{\lambda 1} - S_0$ est normale à la direction $n_1$, $S_{\lambda 1}$, étant la direction depuis laquelle est formée la tache de Laue $T_{Laue1}$ depuis le plan $P_1$, la différence vectorielle $S_{\lambda 2} - S_0$ est normale à la direction $n_2$, $S_{\lambda 2}$ étant la direction depuis laquelle est formée la tache de Laue $T_{Laue2}$ depuis le plan $P_2$.

Plus précisément, la méthode de Laue correspond à un procédé de radiocristallographie consistant à recueillir un cliché de diffraction d'un faisceau polychromatique de rayons X par un cristal. Pour une longueur d'onde donnée, un faisceau incident est décrit par son vecteur d'onde $\vec{k}$ dirigé dans le sens de propagation du faisceau et de norme $2\pi/\lambda$. On considère que le faisceau polychromatique contient toutes les longueurs d'onde entre deux valeurs minimale et maximale $\lambda_{min}$ et $\lambda_{max}$. Un faisceau diffracté est décrit de même par son vecteur d'onde $\vec{k'}$. Les deux vecteurs $\vec{k}$ et $\vec{k'}$ permettent de définir le vecteur de diffusion, souvent noté $\vec{Q}$ :

$$\vec{Q} = \vec{k'} - \vec{k}.$$

Les directions dans lesquelles les faisceaux diffusés interfèrent de manière constructive sont alors données par la condition de Laue : il suffit que l'extrémité du vecteur de diffusion coïncide avec un noeud du réseau réciproque. Le cristal étant fixe, il est commode pour donner une représentation géométrique de la méthode de Laue de dessiner le lieu des extrémités de ce vecteur.

Puisqu'on ne s'intéresse qu'à la diffusion élastique, c'est-à-dire aux ondes diffusées à la même énergie que le faisceau incident, on ne considère pour une longueur d'onde donnée que les vecteurs diffusés de même longueur que le vecteur d'onde du faisceau incident. Quand le faisceau diffusé décrit toutes les orientations possibles, l'extrémité du vecteur de diffusion décrit une sphère de rayon $2\pi / \lambda$, dénommée la sphère d'Ewald. En tenant compte de toutes les longueurs d'onde présentes dans le faisceau incident, on obtient une famille de sphères. Tous les noeuds présent dans cette zone donnent lieu à diffraction, et donc peuvent mener à une tache de diffraction sur le détecteur.

De manière générale, un cliché de Laue est une image distordue du réseau réciproque. A des points alignés dans le réseau réciproque, correspondent des taches situées sur une conique sur le cliché (des ellipses ou des branches d'hyperbole). De plus, les différentes harmoniques d'une réflexion sont toutes confondues dans la même tache.

Avant de réaliser une expérience de physique sur un cristal, il est souvent nécessaire de l'aligner suivant une direction cristallographique précise. La méthode de Laue permet de le faire de manière routinière. Le cristal est placé sur une tête goniométrique. Le cliché obtenu est une figure composée d'un ensemble de taches représentant toutes les directions de l'espace réciproque. Il est alors nécessaire, à ce niveau, d'indexer les taches de diffraction, c'est à dire retrouver la nomenclature [hkl] des indices de Miller des directions de l'espace réciproque qui ont diffracté et de les nommer.

Dans un second temps on peut alors calculer les désorientations en fonctions du point (direction hkl) à corriger en le ramenant, par exemple, au centre du diagramme. Le calcul des angles de corrections a déjà été effectué avec des abaques dit de Greninger référencés en fonction des distances cristal-film. À ce jour plusieurs logiciels ont été développés permettant des indexations par superposition des diagrammes théoriques et pratiques, ils permettent aussi le calcul automatique des corrections angulaires à apporter à la tête goniométrique ou au système de réorientation.

Cette méthode est couramment utilisée sur des dispositifs de laboratoires et en synchrotron. La difficulté est de traiter les images : il faut rechercher les pics, les indexer et calculer les distances et angles entre pics.

Il a déjà été proposé de recourir à des méthodes de diffraction électronique et notamment plusieurs variantes ont été décrites pour mesurer les déformations sur un microscope électronique : le CBED (Convergent Beam Electron Diffraction), l'holographie en champ sombre et le NBED (NanoBeam Electron Diffraction). Dans le cas du NBED, on vient illuminer un échantillon par un faisceau électronique parallèle et on enregistre un cliché de diffraction composé lui aussi de plusieurs taches qui, par comparaison avec un standard, permet de remonter aux contraintes locales.

Néanmoins, dans le cas d'échantillons monocristallins ou comportant peu de cristaux (1-3 cristaux dans le volume sondé), l'indexation des taches, c'est-à-dire l'attribution des indices de Miller à chaque spot, est possible.

Typiquement avec un monocristal de Germanium, on obtient une image de diffraction comportant une dizaine de taches, aisément indexables.

Dans un cas réellement multicristallin, une dizaine ou un vingtaine de grains viennent diffracter simultanément, ce qui rend l'indexation impossible car il n'y a pas une solution unique mais plusieurs solutions en raison du grand nombre de taches (plusieurs centaines).

On ne peut donc pas traiter en général les cas où plus que cinq grains sont éclairés en même temps par le faisceau. Cette limitation est valable tant en diffraction X, qu'en diffraction de faisceau électronique.

Pour déterminer le champ d'orientation cristalline et de déformation, on vient balayer un échantillon devant un faisceau dont la taille est de l'ordre de la taille des grains. Une lentille de focalisation $L_f$ permet de focaliser un faisceau polychromatique sur un échantillon, les faisceaux diffractés par ledit échantillon sont imagés sur un détecteur, formant des clichés ou images .

Il a déjà été proposé dans la littérature et notamment dans l'article de B. C. Larson, Wenge Yang, G. E. Ice, J. D. Budai & J. Z. Tischler, "Three-dimensional X-ray structural microscopy with submicrometre resolution" Nature 415, 887-890 (21 February 2002) | doi:10.1038/415887a, une méthode permettant de localiser les grains en faisant glisser un fil entre l'échantillon et le détecteur, ce qui permet de localiser les grains en les triangulant mais pas de les imager. Le principe consiste à successivement occulter les taches de diffraction en faisant glisser un fil entre l'échantillon et le détecteur, ce qui permet a posteriori de reconstruire individuellement les clichés Laue.

Néanmoins cette méthode est contraignante dans la mesure où elle nécessite l'emploi d'un fil glissant.

C'est pourquoi et dans ce contexte, la présente invention a pour objet un nouveau procédé de mesure de l'orientation et de la déformation élastique déviatorique des grains dans des matériaux multicristallins utilisant une opération de désentrelacement géométrique de clichés de Laue.

Plus précisément il s'agit d'un procédé de mesure de l'orientation et de la déformation élastique déviatorique de grains contenus dans un échantillon de matériau multicristallin comportant un ensemble de grains caractérisé en ce qu'il comprend les étapes suivantes :

- l'illumination dudit échantillon par un faisceau polychromatique de rayons selon une première direction aptes à être diffractés par lesdits grains;
- l'enregistrement d'une première série d'un premier nombre d'images par un détecteur plan réalisant des images dans un premier plan défini par ladite première direction et par une seconde direction, lesdites images étant des clichés de Laue comprenant les taches de diffraction correspondant à des particules numériques images propres à chacun desdits grains, lesdites images étant réalisées successivement par le déplacement dudit échantillon, ledit déplacement étant effectué selon une troisième direction perpendiculaire audit plan;
- la concaténation de la première série d'images dans un volume dont les trois dimensions sont celles du détecteur plan et celle du déplacement ;
- la recherche de particules dans ledit volume par analyse de connexité 3D (comme décrit dans le brevet FR2909205) permettant de discrétiser lesdites particules dans ledit volume;
- le calcul des centres de masse de chacune des particules pour chacun desdits grains, permettant de déterminer les coordonnées relatives auxdites particules, dans ledit plan et selon la troisième direction ;

- la détermination de l'ensemble des coordonnées dans ledit premier plan selon lesdites première et seconde directions à partir des positions desdits centres de masse, pour former des clichés élémentaires de Laue relatifs à chacun desdits grains;
- l'indexation desdits clichés élémentaires de Laue relatifs à chacun desdits grains de manière à définir l'orientation et la déformation de la maille cristalline desdits grains.

Selon une variante de l'invention, le procédé comprend en outre la détermination de l'étendue spatiale de chaque grain selon la troisième direction par mesure de la taille de la particule numérique image suivant ladite troisième direction à partir de l'analyse de connexité.

La concaténation d'images 2D permet de former une image 3D et d'utiliser un traitement d'images 3D (connexité 3D) pour discrétiser (c'est à dire séparer les taches des différents grains). Cette concaténation est basée sur le traitement numérique des projections d'un objet par reconstruction mathématique. Le procédé de la présente invention propose ainsi d'effectuer un traitement numérique 3D des images de Laue 2D concaténées.

L'intérêt de l'invention réside notamment dans l'application tomographie, la tomoraphie étant notamment explicitée dans l'article de Avinash C. Kak and Malcolm Slanet « Principles of Computerized Tomographic Imaging » IEEE.

Selon une variante de l'invention, le procédé comprend l'enregistrement d'un premier ensemble de plusieurs séries d'images, chaque série d'images étant réalisée en tournant l'échantillon d'un pas d'angle autour d'un axe parallèle à ladite seconde direction, de manière à générer une rotation du plan défini par les première et troisième directions, pour déterminer l'étendue desdits grains selon ladite première direction.

Selon une variante de l'invention, le procédé comprend en outre l'enregitrement d'un second ensemble de plusieurs séries d'images, chaque série d'images étant réalisées en déplaçant l'échantillon d'un pas selon ladite seconde direction, de manière à déterminer l'étendue desdits grains selon ladite seconde direction.

Selon une variante de l'invention, le faisceau d'analyse possède un diamètre de l'ordre du micron, le pas de déplacement étant de l'ordre d'un demi-micron.

Selon une variante de l'invention, le détecteur est un détecteur résolu en énergie permettant d'obtenir le tenseur complet des déformations par mesure directe de la valeur de l'énergie de l'une des taches sur ce détecteur, cette valeur étant un paramètre d'entrée d'un logiciel standard comme XMAS (X-ray Micro Analysis Software) pour le calcul du tenseur complet.

Selon une variante de l'invention, le procédé comprend en outre une étape de traitement des images Laue obtenues, permettant de déterminer l'état de dilatation de chacun des grains.

Selon une variante de l'invention, le procédé comprend en outre une étape de calcul mathématique utilisant les équations de l'équilibre mécanique entre deux grains adjacents et la relation mathématique entre contraintes globale et locale permettant de déterminer l'état de compression de chacun des grains.

Selon une variante de l'invention, le faisceau d'énergie est un faisceau de rayons X.

Selon une variante de l'invention, le faisceau d'énergie est un faisceau électronique.

Selon une variante de l'invention, le faisceau d'énergie est un faisceau neutronique.

L'invention sera mieux comprise et d'autres avantages apparaîtront à la lecture de la description qui va suivre donnée à titre non limitatif et grâce aux figures annexées parmi lesquelles :

- la figure 1 illustre l'enregistrement de clichés de Laue selon l'art connu dans le cas simplifié d'un échantillon à deux grains ;
- la figure 2 illustre un exemple de dispositif permettant de mettre en oeuvre le procédé de la présente invention ;
- les figures 3a à 3d schématisent les différentes étapes de procédé selon l'invention.

Le procédé de la présente invention, comprend de manière générale, l'enregistrement d'une série de clichés ou images de diffraction d'un échantillon multicristallin comprenant plusieurs types de grains, les différents clichés étant réalisés en déplaçant ledit échantillon perpendiculairement au faisceau d'irradiation. Les taches de diffraction correspondent à des particules dénommées dans la présente description particules numériques images. Le procédé de la présente invention porte sur le traitement de ces particules numériques pour mener à bien le désentrelacement des clichés de Laue afin de déterminer des informations cristallographiques propres à chacun des grains présents dans l'échantillon multicristallin analysé.

La description qui va suivre concerne l'irradiation de l'échantillon par un faisceau de rayons X. Néanmoins la présente invention peut tout aussi bien être appliquée dans le cadre d'un rayonnement électronique ou neutronique.

Typiquement dans le cas de grains de taille de l'ordre de quelques microns, et en utilisant un faisceau de rayons X d'environ un micron de diamètre, le pas de déplacement entre deux positions $Z_I$ du détecteur, peut être de l'ordre d'un demi-micron. Cependant la méthode peut être généralisée à tout type de dimensions, pourvu que les rapports de taille précédents soient respectés. De manière générale, l'échantillon est déplacé dans M positions par rapport au détecteur.

Le principe de l'invention consiste à repérer les taches communes ou particules numériques images, à plusieurs images successives et qui proviennent donc d'un même grain.

Dans la suite de la description, on considère qu'un ensemble de k grains Gk génèrent par diffraction de rayons X, sur les images enregistrées des particules numériques dont les positions $P_{ijGk}$ sont repérées dans un plan image selon des axes X et Y. La figure 2 illustre une configuration possible pour mettre en oeuvre le procédé de l'invention. Un faisceau de rayons X, FX est focalisé via une lentille $L_f$ sur l'échantillon à analyser $E_{ch}$, selon une direction X. Un détecteur D est disposé perpendiculairement au faisceau de manière à pouvoir enregistrer des images dans un plan P défini par les directions X,Y. Il est prévu des moyens non représentés permettant de déplacer ledit échantillon selon l'axe Z, perpendiculaires aux axes X et Y. Le détecteur enregistre des images ou clichés de Laue $I_{ZL}$.

Selon la présente invention, il est proposé de procéder à l'enregistrement d'une série d'images de diffraction à chaque position $Z_L$ selon l'axe Z, correspondant à la première étape du procédé de l'invention.

Un échantillon multicristallin comportant k grains $G_k$, les particules $P_{ijGk}$ sont caractérisées sur une image par un nombre $N_{PijGk}$ et des positions $X_{PijGk}$ et $Y_{PijGk}$.

La première étape du procédé consiste à effectuer M enregistrements successifs, liés aux M déplacements de l'échantillon par rapport au faisceau et définissant des positions $Z_L$ de l'échantillon.

On procède alors à une opération de concaténation de l'ensemble des images 2D, conduisant à la construction d'un volume 3D de données: $(Z_L, X_{PijGk}, Y_{PijGk})$.

On procède ensuite à une recherche de particules 3D dans ce volume par analyse de connexité 3D, permettant de discrétiser les particules, qui présentent des zones de recouvrement.

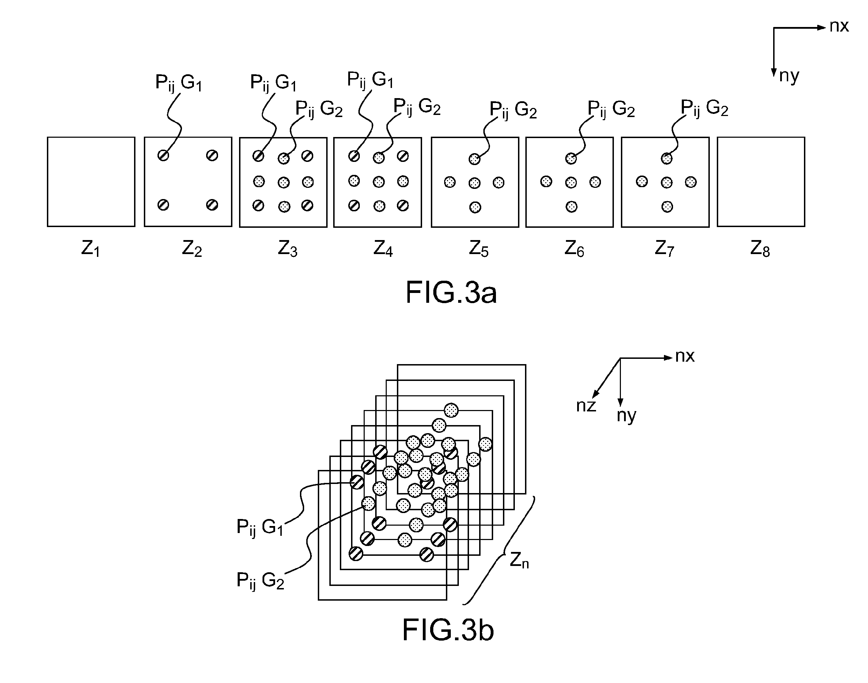

Pour illustrer ce propos, les figures 3a et 3b illustrent un exemple d'échantillon simplifié ne comportant que deux types de grains $G_1$ et $G_2$.

Ainsi la figure 3a illustre une succession de M positions de l'échantillon avec M = 8, et générant ainsi 8 prises d'images de l'ensemble simplifié des deux grains générant respectivement un ensemble de particules $P_{ijG1}$ et $P_{ijG2}$, les prises d'image étant réalisées en décalant par pas de $\Delta z$ selon la direction Z, l'échantillon par rapport au faisceau.

Il apparait ainsi que :

- en position $Z_1$: aucune particule de grain n'est observée sur l'image $I_{Z0}$;
- en position $Z_2$: il apparait sur l'image $I_{Z2}$: des particules $P_{ijG1}$;
- en position $Z_3$: il apparait sur l'image $I_{Z3}$: des particules $P_{ijG1}$ et des particules $P_{ijG2}$;
- en position $Z_4$: il apparait sur l'image $I_{Z4}$: des particules $P_{ijG1}$ et des particules $P_{ijG2}$;
- en position $Z_5$: il apparait sur l'image $I_{Z5}$ des particules $P_{ijG2}$;
- en position $Z_6$: il apparait sur l'image $I_{Z6}$: des particules $P_{ijG2}$;
- en position $Z_7$: il apparait sur l'image $I_{Z7}$: des particules $P_{ijG2}$;
- en position $Z_8$: aucune particule de grain n'est observée sur l'image $I_{Z8}$.

Dans une seconde étape du procédé de l'invention, on procède à la concaténation de l'ensemble des images enregistrées, de façon à créer un ensemble à trois dimensions dont les dimensions correspondent à celles du détecteur plan et au nombre d'images enregistrées le long de l'axe Z (dans l'exemple présent : 8).

On procède alors à l'opération de recherche de particules 3D dans ce volume par analyse de connexité pour définir l'ensemble des données inhérentes aux positions $(Z_L, X_{PijGk}, Y_{PijGk})$ des particules $P_{ijG1}$ et $P_{ijG2}$ selon les trois directions, comme illustré en figure 3b.

A partir de cette opération, on calcule le centre de masse de chaque particule. Cela permet de construire une table du centre de masse de toutes les particules avec une résolution sub-voxel.

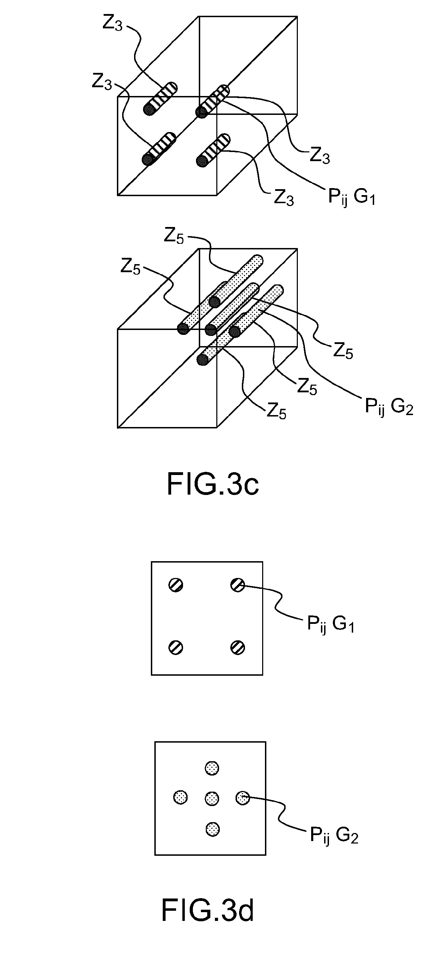

Ainsi dans l'exemple simplifié : on isole un premier ensemble relatif aux images $(I_{Z2}, I_{Z3}, I_{Z4})$ comportant les coordonnées $(X_{PijG1}, Y_{PijG1})$ et un second ensemble relatif aux images $(I_{Z3}, I_{Z4}, I_{Z5}, I_{Z6}, I_{Z7})$ comportant les coordonnées $(X_{PijG2}, Y_{PijG2})$. La figure 3c met en évidence ces deux ensembles.

On calcule le centre de masse de chaque particule. Cela permet de construire une table du centre de masse de toutes les particules, avec une résolution sub-voxel.

Toutes les particules dont les coordonnées $Z_L$ du centre de masse sont les mêmes appartiennent nécessairement au même grain, puisque le centre de masse correspond au maximum de l'intensité diffractée et que deux grains ne se situent pas au même endroit suivant Z. Si deux grains sont l'un derrière l'autre (suivant X), leur centre de masse en Z sur le volume 3D peut être le même et on ne pourra pas les discerner.

Typiquement le centre de masse pour le grain $G_1$ est positionné en coordonnée $Z_3$, alors que le centre de masse relatif au grain $G_2$ est positionné en coordonnée $Z_5$.

Pour toutes les coordonnées $Z_M$ des centres de masses ainsi trouvés, on lit les coordonnées $X_{PijG1}$ et $Y_{PijG1}$ correspondantes et on vient reformer numériquement des nouveaux clichés de Laue épurés à partir de régions d'intérêt autour de chaque taches.

Dans la mesure où le calcul du centre de masse est sub-voxel, on peut suréchantilloner suivant Z et donc créer des clichés de Laue intermédiaires, ce qui permet de séparer d'autant plus les grains entre eux. La figure 3d illustre cette étape du procédé dans le cas de l'échantillon simplifié à deux grains.

On indexe tous les clichés de Laue épurés par une méthode standard de l'art connu.

Une fois chaque image indexée, il est possible de reformer l'extension spatiale selon l'axe Z, d'un grain en regardant la dimension de la particule 3D trouvée lors de l'opération de recherche de particules par analyse de connexité. On peut effectuer cette étape pour tous les grains, et ainsi procéder à une indexation de tous les grains.

Typiquement dans le cas de l'exemple simplifié, la taille du grain G1 selon Z est déduite de la présence des particules $P_{ijG1}$ sur les trois images correspondant aux positions $Z_2$, $Z_3$ et $Z_4$. Le calcul de la différence entre les positions de l'échantillon en $Z_2$ et $Z_4$ donne la taille du grain G1 suivant Z.

Pour le grain G2, les particules relatives à ce grain sont présentes sur 5 images, donc les grains présentent une étendue spatiale selon l'axe Z de 2,5 microns.

Afin de résoudre complètement l'agencement des grains et de connaître également l'étendue spatiale des grains selon la direction X, on peut appliquer après chaque déplacement linéaire selon l'axe Z, une rotation de l'échantillon et recommencer un nouveau balayage. On applique ce double balayage (déplacement linéaire-rotation) jusqu'à avoir couvert 360 degrés.

On réalise un ensemble de plusieurs séries d'images $I_{pNZ,\varphi}$, chaque série d'images étant réalisée en tournant l'échantillon d'un pas d'angle $\varphi$ autour de l'axe Y, de manière à générer une rotation du plan défini par les première et troisième directions X et Z, pour déterminer l'étendue desdits grains selon ladite direction X.

Pour chaque angle, on obtient une « projection » de chaque grain, il s'agit alors d'une opération de tomographie en imagerie par diffraction de Laue dans le cadre de la présente invention. La distribution $(z,\varphi)$ de chaque grain ainsi obtenue permet, par utilisation d'algorithmes mathématiques de reconstruction analogues aux algorithmes utilisés en scanner médical, de remonter à la forme 2D du grain suivant lesdites premières et troisièmes directions. En plus de la forme, l'étape d'indexation fournit l'orientation cristallographie du grain et la distorsion de la maille cristalline grâce à l'écart à la symétrie de cristal non déformé.

Enfin et ce afin de déterminer l'étendue spatiale des grains selon la direction Y et avoir ainsi une imagerie 3D des grains, le procédé de l'invention peut également avantageusement comprendre l'enregistrement d'un second ensemble de plusieurs séries d'images $I_{pNZ,Y}$ chaque série d'images étant réalisées en déplaçant l'échantillon d'un pas $\Delta Y$ selon ladite seconde direction Y, de manière à déterminer l'étendue desdits grains selon ladite seconde direction Y.

La combinaison de l'ensemble des opérations précédemment décrites permet de définir l'étendue de chacun des grains en 3D selon les directions Z, X et Y. L'étape d'indexation fournit, en plus de la forme 3D, l'orientation et le tenseur déviatorique des déformations en utilisant des logiciels standards comme XMAS ou OrientExpress.

Pour effectuer les enregistrements nécessaires à la mise en oeuvre du procédé de la présente invention, il peut être très intéressant d'utiliser un détecteur 2D suffisamment résolu en énergie afin d'éviter d'avoir à faire une double expérience polychromatique-monochromatique.

En diffraction de Laue, on travaille avec un faisceau dit « blanc » ou polychromatique, c'est-à-dire contenant plusieurs longueurs d'onde (ou énergies). Ce faisceau blanc illumine un grain et génère un ensemble de taches diffractées sur un détecteur 2D, chaque tache correspondant à la diffraction d'un plan cristallin par une des longueurs d'onde du faisceau incident.

Sur la figure 1 initialement présentée, on voit deux plans cristallins $P_1$ et $P_2$ d'un même grain diffracter, car soumis à un faisceau contenant deux longueurs d'onde $\lambda_1$ et $\lambda_2$. La mesure sur la caméra de type CCD permet de remonter à l'orientation cristallographique du grain (il y a une relation entre la position de la tache $T_{Laue}$ sur la CCD et l'orientation cristallographique du grain, c'est la loi de Bragg) et aux déformations angulaires élastiques de la maille cristalline de ce grain, mais pas aux déformations en taille du réseau cristallin. On peut donc savoir que la structure cristalline est distordue mais on ne peut pas connaître sa déformation hydrostatique ou dilatation.

Pour ce faire, il faut connaître les longueurs d'onde des faisceaux diffractés, ce qui n'est pas accessible car on utilise une caméra CCD qui ne donne pas d'information sur l'énergie (ou la longueur d'onde) des faisceaux diffractés. Aujourd'hui, l'homme du métier enchaîne deux analyses : une analyse polychromatique suivie d'une analyse en faisceau monochromatique (avec une énergie commune), ce qui permet de connaître l'énergie d'une des taches. Cette analyse est rendue difficile par des problèmes d'alignement, de faible statistique et de complexité à retrouver une même tache en polychromatique et monochromatique.

C'est pourquoi, il est proposé avantageusement d'utiliser un détecteur 3D, c'est-à-dire un détecteur qui est résolu spatialement (2D) et résolu en énergie. Ce genre de détecteur commence à apparaître sur le marché.

Avec ce genre de détecteur, on obtient l'énergie de chaque tache en un seul examen polychromatique, on peut donc remonter rapidement à l'orientation cristallographique des grains, à leur déformation élastique angulaire et surtout à leur déformation en taille grâce à la longueur d'onde de la tache ainsi mesurée par le détecteur 3D.

En alternative au détecteur résolu en énergie il est possible de remonter aux mêmes types d'informations par méthode de calcul. De manière générale, la tomographie Laue permet de remonter à la forme des grains et aux positions spatiales des états de déformations élastiques déviatoriques. On applique ensuite la loi de Hooke pour déterminer les contraintes déviatoriques (le module d'élasticité étant connu). Des considérations mécaniques permettent de déterminer les états de contraintes hydrostatiques, et donc par suite les états de contraintes « complets » (accès au tenseur complet des contraintes).

Ces considérations mécaniques sont:

- l'expression de l'équilibre mécanique local au sein du matériau ;
- la relation entre les contraintes locales et la contrainte macroscopique (c'est-à-dire en moyenne sur le matériau), laquelle est connue ou mesurable expérimentalement. (Elle est nulle si aucun effort n'est appliqué au matériau.)

En chaque point où la contrainte déviatorique est connue, peut être associé un état de contrainte « complet » (composante déviatorique + composante hydrostatique). On a ainsi accès à toute l'information : forme des grains, orientation cristallographique des grains, tenseur complet des contraintes des grains.

L'équilibre mécanique entre deux positions adjacentes X1 et X2 d'états de contrainte σ1 et σ2 s'exprime comme : (un caractère souligné désignant un tenseur d'ordre 2)

$$\underline{\sigma}_1 \cdot n = \underline{\sigma}_2 \cdot n \quad \text{(en l'absence de forces de volumes)} \quad (1)$$

où n est la normale de l'élément de surface entre X1 et X2 (voir figure 1).

En décomposant les états de contraintes en leurs composantes déviatoriques $\underline{S}$ et hydrostatiques $\underline{\sigma}^h$, l'égalité (1) devient :

$$(\underline{S}_1 + \underline{\sigma}^h_1) \cdot n = (\underline{S}_2 + \underline{\sigma}^h_2) \cdot n \quad (2)$$

soit, compte tenu du fait que $\underline{\sigma^h1} = \sigma^h1 \; \underline{I}$ et $\underline{\sigma^h2} = \sigma^h2 \; \bar{I}$ (tenseurs hydrostatiques), où est la matrice identité, et en développant l'expression,

$$(\sigma^h_2 - \sigma^h_1) \; \underline{I} \cdot n = -(\underline{S}_2 - \underline{S}_1) \cdot n \quad \text{où } \underline{I} \text{ est la matrice identité} \quad (3)$$

En notant que $\underline{I} \cdot n = n$ puis en multipliant l'égalité par n, nous obtenons,

$$((\sigma^h_2 - \sigma^h_1) \cdot n) \cdot n = -[\,(\underline{S}_2 - \underline{S}_1) \cdot n\,] \cdot n \quad (4)$$

En notant que n . n = 1 (n est un vecteur unitaire) :

$$(\sigma^h_2 - \sigma^h_1) = -[(\underline{S}_2 - \underline{S}_1) \cdot n] \cdot n \quad (5)$$

En utilisant l'identité remarquable $(\underline{A} \cdot b) \cdot b = \underline{A} : (b \times b)$, où A est une matrice et b un vecteur, et : et x sont le produit doublement contracté et le produit dyadique entre deux tenseurs, successivement,

$$(\sigma^h_2 - \sigma^h_1) = -(\underline{S}_2 - \underline{S}_1) : \underline{N} \quad \text{avec} \quad \underline{N} = n \times n \quad (6)$$

En conditions d'équilibre mécanique, la différence entre les états de contraintes hydrostatiques $\sigma^h_1$ et $\sigma^h_2$ peut donc être déterminée à partir des états de contraintes déviatoriques $\underline{S}_1$ et $\underline{S}_2$, et de n.

La relation entre contraintes locales et contrainte macroscopique fournit une relation supplémentaire permettant de déterminer les valeurs individuelles des états de contraintes hydrostatiques, $\sigma^h_1$ et $\sigma^h_2$. Elle s'exprime comme :

$$\frac{\int_V \sigma\,.dV}{V} = \underline{\Sigma} \qquad\qquad (7)$$

Où V est le volume de l'échantillon considéré, $\underline{\sigma}$ est l'état de contrainte en un lieu donné de l'échantillon, et $\underline{\Sigma}$ est l'état de contrainte macroscopique ($\underline{0}$ pour un échantillon non sollicité mécaniquement).

Par exemple, pour le cas d'un bicristal constitué de deux grains de mêmes volumes séparés par un joint de normale $\underline{n}$, la relation (7) s'exprime : :

$$0.5\,(\underline{\sigma}_1 + \underline{\sigma}_2) = \underline{\Sigma} \qquad (8)$$

soit, en considérant uniquement la composante hydrostatique de l'expression (8) et après manipulations élémentaires :

$$\sigma^h{}_1 + \sigma^h{}_2 = 2\,\Sigma^h \quad \text{où } \Sigma^h \text{ est la composante hydrostatique de } \underline{\Sigma} \qquad (9)$$

En combinant les relations (6) et (9), on obtient :

$$\sigma^h{}_1 = \ 0.5\,(\underline{S}_2 - \underline{S}_1) : \underline{N} + \Sigma^h \qquad (10)$$

$$\sigma^h{}_2 = -\,0.5\,(\underline{S}_2 - \underline{S}_1) : \underline{N} + \Sigma^h$$

Les états de contraintes "complets" sont donc parfaitement connus,

$$\underline{\sigma}_1 = \ \underline{S}_1 + [\ 0.5\,(\underline{S}_2 - \underline{S}_1) : \underline{N}\ ]\ \underline{I} + \Sigma$$

$$\qquad\qquad\qquad (11)$$

$$\underline{\sigma}_2 = \ \underline{S}_2 - [\ 0.5\,(\underline{S}_2 - \underline{S}_1) : \underline{N}\ ]\ \underline{I} + \Sigma$$

Il est à noter que l'on peut avantageusement placer un détecteur résolu en énergie près de l'échantillon qui permet de mesurer la fluorescence X et donc la composition chimique. Ainsi, on peut discriminer deux grains de groupe d'espace identiques mais la diffraction Laue ne peut pas différencier car elle n'est sensible qu'au groupe d'espace et pas à la composition chimique. Par exemple, un grain d'or et un grain de cuivre ont le même groupe d'espace mais leur énergie de fluorescence diffère.

**Revendications**

**1.** Procédé de mesure de l'orientation et de la déformation élastique déviatorique de la maille cristalline des grains contenus dans un échantillon de matériau multicristallin comportant un ensemble de grains (G1, ..., Gi,..., Gn) **caractérisé en ce qu'**il comprend les étapes suivantes :

- l'illumination dudit échantillon par un faisceau polychromatique de rayons selon une première direction X aptes à être diffractés par lesdits grains;
- l'enregistrement d'une première série d'un premier nombre (M) d'images ($I_{1NZ}$) par un détecteur plan réalisant des images dans un premier plan (Px, Py) défini par ladite première direction (X) et par une seconde direction (Y), lesdites images étant des clichés de Laue comprenant les taches de diffraction correspondant à des particules numériques images propres à chacun desdits grains, lesdites images étant réalisées successivement par le déplacement dudit échantillon effectué selon une troisième direction (Z) perpendiculaire audit plan, le déplacement dudit échantillon étant réalisé par pas de $\Delta z$;

- la concaténation de la première série d'images dans un volume dont les trois dimensions sont celles du détecteur plan (NX, NY) et celle du déplacement (NZ);

- la recherche de particules dans ledit volume par analyse de connexité 3D permettant de discrétiser lesdites particules dans ledit volume;

- le calcul des centres de masse de chacune des particules pour chacun desdits grains, permettant de déterminer les coordonnées ($X_{PijGk}$, $Y_{PijGk}$, $Z_L$) relatives auxdites particules, dans ledit plan et selon la troisième direction;

- la détermination de l'ensemble des coordonnées ($X_{PijGk}$, $Y_{PijGk}$) dans ledit premier plan selon lesdites première et seconde directions (X , Y) à partir des positions ($Z_3$, $Z_5$, $Z_L$) desdits centres de masse, pour former des clichés élémentaires de Laue relatifs à chacun desdits grains;

- l'indexation desdits clichés élémentaires de Laue relatifs à chacun desdits grains de manière à définir l'orientation et la déformation élastique déviatorique de la maille cristalline desdits grains.

2. Procédé de mesure de l'orientation et de la déformation élastique déviatorique de la maille cristalline des grains selon la revendication 1, **caractérisé en ce qu'**il comprend en outre la détermination de l'étendue spatiale de chaque grain selon la troisième direction (Z) par mesure de la taille de la particule numérique image suivant ladite troisième direction.

3. Procédé de mesure de l'orientation et de la déformation élastique déviatorique de la maille cristalline des grains selon l'une des revendications précédentes, **caractérisé en ce qu'**il comprend l'enregistrement d'un premier ensemble de plusieurs séries d'images ($I_{pNZ,\varphi}$), chaque série d'images étant réalisée en tournant l'échantillon d'un pas d'angle ($\varphi$) autour d'un axe parallèle à ladite seconde direction, de manière à générer une rotation du plan défini par les première et troisième directions (X, Z), pour déterminer l'étendue desdits grains selon ladite première direction (X).

4. Procédé de mesure de l'orientation et de la déformation élastique déviatorique de la maille cristalline des grains selon l'une des revendications précédentes, **caractérisé en ce qu'**il comprend en outre l'enregistrement d'un second ensemble de plusieurs séries d'images ($I_{pNZ, Y}$), chaque série d'images étant réalisées en déplaçant l'échantillon d'un pas $\Delta Y$ selon ladite seconde direction (Y), de manière à déterminer l'étendue desdits grains selon ladite seconde direction (Y).

5. Procédé de mesure de l'orientation et de la déformation élastique déviatorique de la maille cristalline des grains selon l'une des revendications précédentes, le faisceau d'analyse possède un diamètre de l'ordre du micron, le pas de déplacement étant de l'ordre d'un demi-micron.

6. Procédé de mesure de l'orientation et de la déformation élastique déviatorique de la maille cristalline des grains selon l'une des revendications précédentes, **caractérisé en ce que** le détecteur est un détecteur résolu en énergie.

7. Procédé de mesure de l'orientation et de la déformation élastique déviatorique de la maille cristalline des grains selon l'une des revendications précédentes, **caractérisé en ce qu'**il comprend en outre une étape de calcul mathématique utilisant les équations de l'équilibre mécanique entre 2 grains adjacents et la relation mathématique entre contraintes globale et locale permettant de déterminer l'état de compression de chacun des grains

8. Procédé de mesure de l'orientation et de la déformation élastique déviatorique de la maille cristalline des grains selon l'une des revendications précédentes, **caractérisé en ce que** le faisceau d'énergie est un faisceau de rayons X.

9. Procédé de mesure de l'orientation et de la déformation élastique déviatorique de la maille cristalline des grains selon l'une des revendications précédentes, **caractérisé en ce que** le faisceau d'énergie est un faisceau électronique.

10. Procédé de mesure de l'orientation et de la déformation élastique déviatorique de la maille cristalline des grains selon l'une des revendications précédentes, **caractérisé en ce que** le faisceau d'énergie est un faisceau neutronique.

FIG.1

FIG.2

EP 2 439 520 A1

$P_{ij} G_1$   $P_{ij} G_1$   $P_{ij} G_1$   $P_{ij} G_1$
$P_{ij} G_2$   $P_{ij} G_2$   $P_{ij} G_2$   $P_{ij} G_2$   $P_{ij} G_2$

nx
ny

$Z_1$   $Z_2$   $Z_3$   $Z_4$   $Z_5$   $Z_6$   $Z_7$   $Z_8$

## FIG.3a

nx
nz   ny

$P_{ij} G_1$
$P_{ij} G_2$

$Z_n$

## FIG.3b

FIG.3c

FIG.3d

Europäisches Patentamt
European Patent Office
Office européen des brevets

# RAPPORT DE RECHERCHE EUROPEENNE

Numéro de la demande

EP 11 18 4265

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | HOFMANN F ET AL: "High energy transmission micro-beam Laue synchrotron X-ray diffraction", MATERIALS LETTERS, NORTH HOLLAND PUBLISHING COMPANY. AMSTERDAM, NL, vol. 64, no. 11, 15 juin 2010 (2010-06-15), pages 1302-1305, XP026995754, ISSN: 0167-577X [extrait le 2010-03-10] * abrégé * * page 1302, colonne de gauche, alinéa 1 * * page 1305, colonne de gauche, alinéa 3 * ----- | 1-10 | INV. G01N23/20 |
| Y | STOCK S R ET AL: "High resolution synchrotron X-ray diffraction tomography of polycrystalline samples", APPLICATIONS OF SYNCHROTRON RADIATION TECHNIQUES TO MATERIALS SCIENCE II,, vol. 375, 1 janvier 1995 (1995-01-01), pages 275-280, XP009149026, * le document en entier * ----- | 1-10 | |
| Y | LARSON B C ET AL: "3-D measurement of deformation microstructure in Al(0.2%)Mg using submicron resolution white X-ray microbeams", APPLICATIONS OF SYNCHROTRON RADIATION TECHNIQUES TO MATERIALS SCIENCE V. SYMPOSIUM,, vol. 590, 1 janvier 2000 (2000-01-01), pages 247-252, XP009149025, * le document en entier * ----- | 1-10 | DOMAINES TECHNIQUES RECHERCHES (IPC)<br><br>G01N |
| A,D | FR 2 909 205 A1 (COMMISSARIAT ENERGIE ATOMIQUE [FR]) 30 mai 2008 (2008-05-30) * abrégé * ----- | 1 | |

Le présent rapport a été établi pour toutes les revendications

| Lieu de la recherche | Date d'achèvement de la recherche | Examinateur |
|---|---|---|
| Munich | 24 janvier 2012 | Rouault, Patrick |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                                                          
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 18 4265

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-01-2012

| Document brevet cité au rapport de recherche | | Date de publication | Membre(s) de la famille de brevet(s) | | Date de publication |
|---|---|---|---|---|---|
| FR 2909205 | A1 | 30-05-2008 | CA | 2671037 A1 | 05-06-2008 |
| | | | EP | 2095327 A1 | 02-09-2009 |
| | | | FR | 2909205 A1 | 30-05-2008 |
| | | | JP | 2010511215 A | 08-04-2010 |
| | | | US | 2010066761 A1 | 18-03-2010 |
| | | | WO | 2008065113 A1 | 05-06-2008 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2909205

**Littérature non-brevet citée dans la description**

- **B. C. LARSON ; WENGE YANG ; G. E. ICE ; J. D. BUDAI ; J. Z. TISCHLER.** Three-dimensional X-ray structural microscopy with submicrometre resolution. *Nature,* 21 Février 2002, vol. 415, 887-890

- **AVINASH C. KAK ; MALCOLM SLANET.** Principles of Computerized Tomographic Imaging. *IEEE*